Europäisches Patentamt

European Patent Office

Office européen des brevets

(11) Veröffentlichungsnummer: **0 131 115**

**A2**

(12) **EUROPÄISCHE PATENTANMELDUNG**

(21) Anmeldenummer: **84105562.7**

(22) Anmeldetag: **16.05.84**

(51) Int. Cl.⁴: **B 63 H 5/16**

(30) Priorität: **06.07.83 DE 3324753**

(43) Veröffentlichungstag der Anmeldung:
**16.01.85 Patentblatt 85/3**

(84) Benannte Vertragsstaaten:
**AT BE CH DE FR GB IT LI LU NL SE**

(71) Anmelder: **Grothues-Spork, Hermann, Dr.-Ing.**
**Heimat 61**
**D-1000 Berlin 37(DE)**

(72) Erfinder: **Grothues-Spork, Hermann, Dr.-Ing.**
**Heimat 61**
**D-1000 Berlin 37(DE)**

(74) Vertreter: **Niemann, Uwe, Dr.-Ing.**
**Ahornstrasse 41**
**D-4300 Essen 1(DE)**

(54) **Anordnung zum Beeinflussen der Propelleranströmung.**

(57) Zum horizontalen Anlenken einer vor Schiffspropellern in Außenhautnähe nach abwärts gerichteten Grenzschichtströmung, die sowohl zu Einbußen des Propellerwirkungsgrades, als auch zu einer verstärkten Schwingungs- und Kavitationsneigung des Propellers führt, werden an beiden Schiffsseiten vor dem Propeller übereinanderliegende und vorzugsweise kreisförmig gekrümmte Umlenkschaufeln vorgesehen, so däß bezüglich Geschwindigkeit und Richtung des Zustroms über die Propellerkreisfläche eine Vergleichmäßigung erreicht wird. Die Schaufeln haben entsprechend den an ihrem Ort herrschenden Strömungsrichtungen zur Außenhaut hin zunehmend nach oben geneigte Eintrittstangenten, so daß ein stoßfreies Auffangen der eintretenden Strömungsschichten gewährleistet ist. Ihre Austrittstangenten liegen so, daß eine möglichst horizontale und axiale Propelleranströmung in diesen Bereichen erhalten wird.

Fig. 1

Anordnung zum Beeinflussen der Propelleranströmung

Die Erfindung betrifft eine Anordnung zum Beeinflussen der Propelleranströmung von insbesondere völligen Einschraubenschiffen aus vor dem Propeller am Schiffsrumpf befestigten Leitschaufeln.

Wirkungsgrad, Kavitation und Schwingungserregung eines Schiffspropellers hängen entscheidend von seiner Anströmung ab. Deswegen hat die Propelleranströmung stets großes Interesse gefunden. Viele Untersuchungen beschäftigen sich damit. Ziel dieser Untersuchungen ist es entweder, eine Vergleichmäßigung der Propelleranströmung zu erreichen oder die im Propellerstrahl enthaltene Drallenergie auszunutzen. Während bei der Ausnützung von Drallenergie hauptsächlich Leistungsrückgewinne und Leistungsersparnisse erwartet werden, soll eine Vergleichmäßigung der Propelleranströmung mit verringerten peripherialen Schwankungen der Eintrittsgeschwindigkeiten an den Propellerflügeln eine Erhöhung des Propellerwirkungsgrades, einen Abbau von Kavitationserscheinungen, einen Abbau von Druckschwankungen an der Außenhaut des Schiffes im Propellerbereich und einen Abbau der hydrodynamischen Erregenden zu Schub- und Drehmomentschwankungen des Propellers bewirken.

Bekannt sind verschiedene Vorrichtungen oder Anordnungen für diese Zwecke, z.B. Leitkränze oder Leitschaufeln vor und hinter dem Propeller, Tunnelabdeckungen über dem Propeller, verwundene Steven sowie symmetrische und unsymmetrische Heckwülste unterschiedlicher Form. Der Aufbau und die Wirkungen von insbesondere Leitschaufeln werden von Takekuma in: Trans. Royal Inst.Nav.Arch. 1979 "Vibration problems and solution from fitting a fin" beschrieben.

Die herkömmlichen Vorrichtungen und Anordnungen sind aber immer noch nicht befriedigend. Insbesondere beobachtet man nach wie vor Strömungsablösungen und Wirbelbildungen vor dem Propeller sowie damit verbundene Widerstandserhöhungen des Schiffes und eine unbefriedigende peripheriale Verteilung des Nachstroms in der Propellerebene.

Aufgabe der Erfindung ist es, eine Anordnung der eingangs beschriebenen Gattung so zu verbessern, daß Strömungsablösungen und Wirbelbildungen vor dem Propeller vermieden werden und eine bessere peripheriale Verteilung des Nachstroms in der Propellerebene erreicht wird.

Diese Aufgabe wird gelöst mit einer Anordnung, die gekennzeichnet ist durch gekrümmte Leitschaufeln mit einer Eintrittstangente, die für einen stroßfreien Eintritt der jeweiligen lokalen Grenzschichtströmung ausgelegt ist, und mit einer Austrittstangente, die im wesentlichen orthogonal zur Propellerebene gerichtet ist.

Der Erfindung liegt die Erkenntnis zugrunde, daß man bisher nicht berücksichtigt hat, daß insbesondere bei völligen Einschraubenschiffen die Grenzschichtströmung an der Außenhaut des Schiffes vor dem Propeller im allgemeinen stark abwärts gerichtet ist, so daß in dieser je nach Schiffsgröße bis zu 2 m breiten Strömungsschicht nur die erheblich kleinere, horizontale Komponente der dort im allgemeinen noch sehr energiereichen Grenzschichtströmung in den Propeller eintritt. Werden nun diesen vertikalen Komponenten der energiereichen Grenzschichtströmung in horizontale Richtung so umgelenkt, daß sie im wesentlichen orthogonal auf die Propellerebene auftreffen, dann wird dadurch nicht nur die peripheriale Verteilung des Nachstromfeldes in der Propellerebene vergleichmäßigt, sondern es läßt sich darüber hinaus auch die in der gesamten Grenzschichtströmung enthaltene Energie ausnutzen.

Die zur Festlegung der Krümmung der Leitschaufeln notwendige Kenntnis der Grenzschichtströmung am Achterschiff erhält man insbesondere aus Schiffsmodellversuchen, die praktisch für jeden Schiffsneubau durchgeführt werden. Dabei können sowohl die zu erwartenden Leistungsersparnisse durch Verbesserung des den Propellerwirkungsgrad enthaltenden Gesamtgütegrades der Propulsion, die Vergleichmäßigung des nominellen und effektiven Nachstromfeldes durch Erhöhung der horizontalen Anströmgeschwindigkeit insbesondere im oberen Propellerbereich und auch die erzielten Verbesserungen des Kavitations- und Schwingungsverhaltens des Propellers ermittelt werden. Es versteht sich, daß die erfindungsgemäße Anordnung auch nachträglich an vorhandenen Schiffen angebracht werden kann.

Im Ergebnis erreicht man durch weitgehend verlustloses Umlenken der in der Grenzschicht vor dem Propeller abwärts gerichteten Strömung eine wesentliche Verbesserung des Propulsionsverhaltens von Schiffen, weil die Grenzschicht mit nahezu gesamter Geschwindigkeitshöhe in den Propellerkreis eintritt und so zu einem stärkeren Abbau peripherialer Anströmungsschwankungen und dementsprechend zur Verbesserung des Wirkungsgrades sowie des Kavitations- und Schwingungsverhaltens führt. Um das zu erreichen genügt es, wenn die Breite der Leitschaufeln gleich oder kleiner als die lokale Grenzschichtdicke ist.

Im übrigen können die Leitschaufeln ein im wesentlichen vertikales Gitter bilden, wobei der Gitterabstand so gewählt werden sollte, daß die gesamte Grenzschichtströmung umgelenkt wird und in der Propellerebene keine nennenswerten, durch die Wirkungen des Gitters hervorgerufenen peripherialen Anströmschwankungen auftreten. In diesem Zusammenhang ist es zweckmäßig, wenn die Leitschaufeln bzw. das Gitter in einem Abstand von bis zu zwei Propellerdurchmessern vor dem Propeller angeordnet sind.

0131115

In der Regel sollten die Leitschaufeln an der Backbordseite und an der Steuerbordseite gleiche Gitterabstände aufweisen bzw. sollten die Gitter symmetrisch ausgebildet sein. Das schließt aber nicht aus, daß im Einzelfall die Leitschaufeln an der Backbordseite und an der Steuerbordseite ungleiche Gitterabstände aufweisen, wenn das aus hydrodynamischen Gründen zweckmäßig und erforderlich sein sollte.

Grundsätzlich könnten die Leitschaufeln in jeder geeigneten Weise profilförmig gekrümmt sein. Eine besonders einfache Ausführungsform ist aber dadurch gekennzeichnet, daß die Leitschaufeln Profilzylinderausschnitte sind und daß die Eintrittskanten mit zunehmendem Abstand vom Schiffsrumpf nach Maßgabe der lokalen Komponenten der Grenzschichtströmung zurückgeschnitten sind. In diesem Fall können nämlich die Leitschaufeln einfach profilierte Bleche sein, die an entsprechenden Stellen an die Außenhaut des Schiffes angeschweißt werden. Besonders einfach werden die Verhältnisse dann, wenn die Leitschaufeln Kreiszylinderausschnitte sind und in Schiffslängsrichtung eine konstante Krümmung aufweisen. Dann kann man nämlich die Leitschaufeln aus einfach gewalzten Blechen herstellen. Das Zurückschneiden der Eintrittskanten berücksichtigt, daß die vertikalen Komponenten der Grenzschichtströmung mit zunehmendem Abstand von dem Schiffsrumpf kleiner werden.

Es versteht sich, daß die Leitschaufeln über ihre Länge auch eine Profildickenverteilung aufweisen können, weil dadurch der Anströmungsbereich für stoßfreien Eintritt der Grenzschichtströmung vergrößert wird.

Die Austrittskanten der Leitschaufeln sollten grade sein und insbesondere im Bereich der Anschlußstelle der Leitschaufel an den Schiffsrumpf orthogonal zur Oberfläche des Schiffsrumpfes gerichtet sein, - also im wesentlichen parallel zur Propellerebene.

Im folgenden werden in der Zeichnung dargestellte Ausführungsbeispiele der Erfindung erläutert; es zeigen:

Fig. 1 schematisch und in perspektivischer Darstellung das Heck eines völligen Einschraubenschiffes,

Fig. 2 in vergrößerter Darstellung einen Teil des Gegenstandes nach Figur 1,

Fig. 3 eine andere Ausführung des Gegenstandes nach Fig. 1,

Fig. 4 in vergrößerter Darstellung einen Teil des Gegenstandes nach Fig. 3, .

Fig. 5 eine weitere Ausführung des Gegenstandes nach Fig.1,

Fig. 6 in vergrößerter Darstellung einen Teil des Gegenstandes nach Fig. 5.

Das dargestellte Heck 1, dessen Völligkeit durch eingezeichnete Wasserlinien 2 und Spantlinien 3 angedeutet wurde, geht in einen Heckwulst 4 über, an dessen Ende ein Propeller 5 sitzt. In einem Abstand von 1 bis 2 Propellerdurchmessern vor der Propellerebene sind Backbord und Steuerbord auf der Außenhaut des Schiffes Leitschaufeln 6 befestigt. Die Leitschaufeln 6 bestehen aus gekrümmten Blechen, die an die Außenhaut geschweißt sind. Jeweils mehrere Leitschaufeln 6, bei den dargestellten Ausführungsformen insgesamt vier Leitschaufeln 6, sind jeweils vertikal übereinander angeordnet, so daß sie ein Gitter bilden.

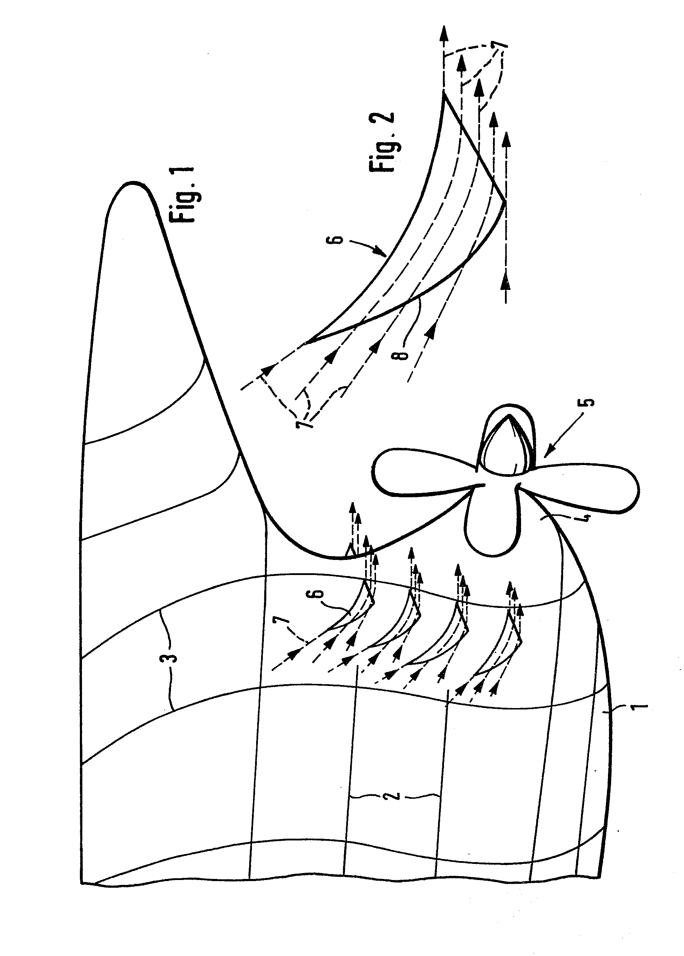

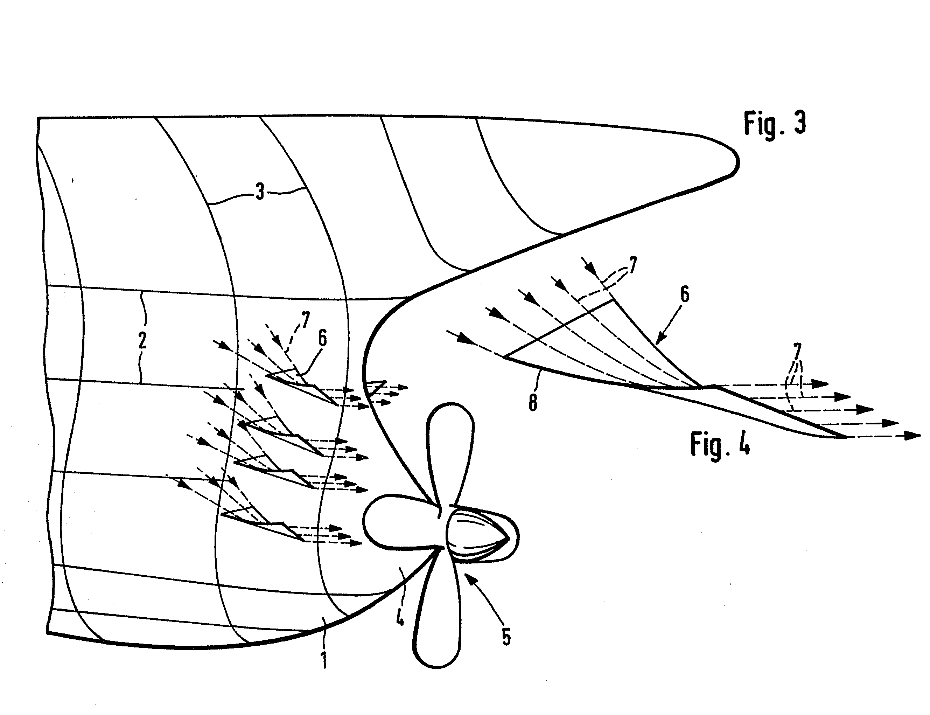

Mit gestrichelten Linien 7 ist der Verlauf der Grenzschichtströmung in unmittelbarer Nähe des Schiffsrumpfes angedeutet. Aus den Figuren 2 und 4 entnimmt man, daß die vertikalen Komponenten der Grenzschichtströmung mit zunehmendem Abstand vom Schiffsrumpf kleiner werden.

Die Leitschaufeln 6 sind so gekrümmt, daß ihre Eintrittstangente für einen stoßfreien Eintritt der jeweiligen lokalen Grenzschichtströmung ausgelegt ist. Ihre Austrittstangente ist im wesentlichen orthogonal zur Propellerebene gerichtet, so daß die von den Leitschaufeln 6 umgelenkte Grenzschichtströmung den gestrichelten Linien 7 folgt und im wesentlichen orthogonal in die Propellerebene eintritt.

Bei der in den Figuren 1 und 2 dargestellten Ausführung bestehen die Leitschaufeln 6 aus Kreiszylinderausschnitten, d.h. sie besitzen in Schiffslängsrichtung eine konstante Krümmung. Da die vertikalen Komponenten der Grenzschichtströmung mit zunehmendem Abstand vom Schiffsrumpf kleiner werden, sind die Eintrittskanten der Leitschaufeln 6 so zurückgeschnitten, daß auch in den weiter entfernt vom Schiffsrumpf liegenden Bereichen eine stoßfreie Anströmung durch die Grenzschichtströmung gewährleistet ist. Die Austrittskanten 9 der Leitschaufeln 6 sind grade, sie erstrecken sich im wesentlichen orthogonal zur Oberfläche des Schiffsrumpfes und damit im wesentlichen parallel zur Propellerebene.

Bei der in den Figuren 3 und 4 dargestellten Ausführung bestehen die Leitschaufeln 6 aus mehrdimensional gekrümmten bzw. verwundenen Blechen mit Eintrittskanten 8, deren Eintrittstangente sich mit zunehmendem Abstand von der Oberfläche des Schiffsrumpfes nach Maßgabe der Größe der vertikalen Komponenten der Grenzschichtströmung ändert.

In allen Fällen wird durch die beschriebene Anordnung eine wesentliche Vergleichmäßigung der peripherialen Anströmgeschwindigkeiten der Propellerflügel erreicht, wodurch im Ergebnis der Propellerwirkungsgrad verbessert wird, Kavitationserscheinungen abgebaut werden, die Druckschwankungen an der Außenhaut des Schiffes im Propellerbereich reduziert werden und die hydrodynamischen Erregenden der Schub- und Drehmomentenschwankungen am Propeller verringert werden.

Er versteht sich, daß die beschriebene Anordnung auch in Verbindung mit anderen Vorrichtungen oder Anordnungen zur Beeinflussung der Propelleranströmung verwendet werden kann, z.B. in Kombination mit Propellerummantelungen oder sonstigen Leiteinrichtungen.

**0131115**

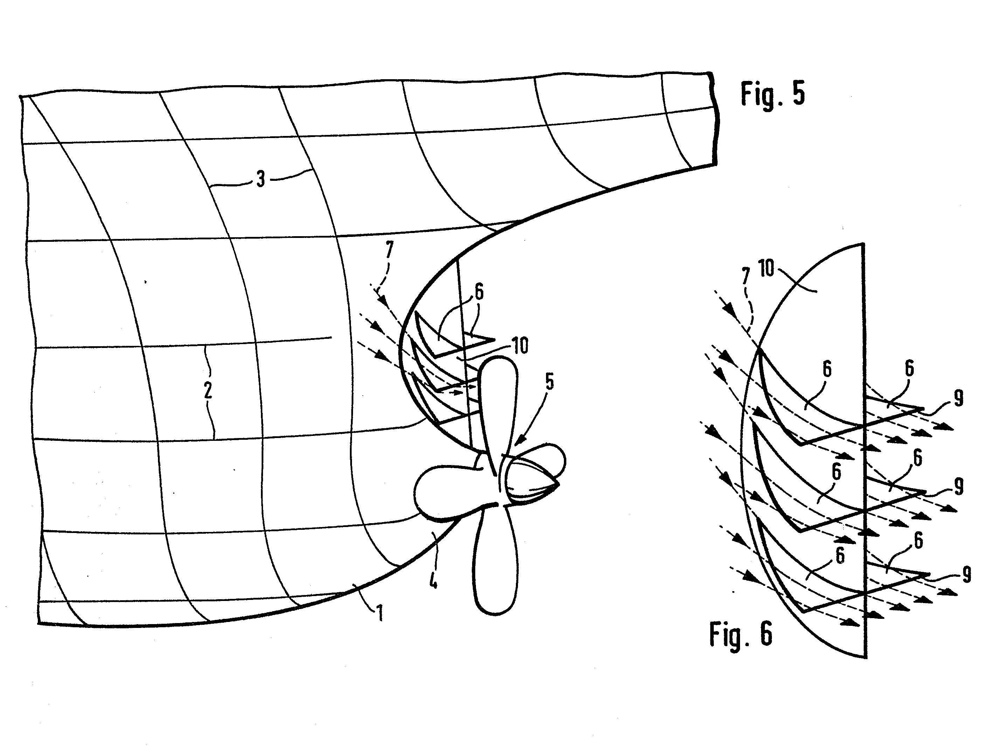

Bei der in den Figuren 5 und 6 dargestellten Ausführung sind
die Leitschaufeln 6 auf beiden Seiten einer Platte 10 angeordnet. Die Platte 10 ist im Schraubenbrunnen vor dem Propeller 5
mittschiffs am Hintersteven befestigt. Bei anderen Hinterschiffsformen kann sowohl oberhalb als auch unterhalb der Propellerwelle eine Platte 10 mit Leitschaufeln 6 angeordnet
sein. Diese Ausführung eignet sich insbesondere für nachträgliche Ausrüstung eines Schiffes mit der Anordnung.

Dr.-Ing. Hermann Gothues-Spork, Heimat 61, D 1000 Berlin 37

- 1 -                           0131115

Patentansprüche

1. Anordnung zum Beeinflussen der Propelleranströmung von insbesondere völligen Einschraubenschiffen aus vor dem Propeller am Schiffsrumpf befestigten Leitschaufeln, g e k e n n z e i c h n e t  d u r c h  gekrümmte Leitschaufeln (6) mit einer Eintrittstangente, die für einen stoßfreien Eintritt der jeweiligen lokalen Grenzschichtströmung (7) ausgelegt ist, und mit einer Austrittstangente, die im wesentlichen orthogonal zur Propellerebene gerichtet ist.

2. Anordnung nach Anspruch 1, d a d u r c h  g e k e n n - z e i c h n e t , daß die Breite der Leitschaufeln (6) gleich oder kleiner als die lokale Grenzschichtdicke ist.

3. Anordnung nach Anspruch 1 oder 2, d a d u r c h  g e - k e n n z e i c h n e t , daß die Leitschaufeln (6) ein im wesentlichen vertikales Gitter bilden.

4. Anordnung nach einem der Ansprüche 1 - 3, d a d u r c h  g e k e n n z e i c h n e t , daß die Leitschaufeln (6) bzw. das Gitter in einem Abstand von bis zu zwei Propellerdurchmessern vor dem Propeller (5) angeordnet sind.

5. Anordnung nach einem der Ansprüche 1 - 4, d a d u r c h  g e k e n n z e i c h n e t , daß die Leitschaufeln (6) an der Backbordseite und an der Steuerbordseite gleiche Gitterabstände aufweisen.

6. Anordnung nach einem der Ansprüche 1 - 4, d a d u r c h  g e k e n n z e i c h n e t , daß die Leitschaufeln (6) an der Backbordseite und an der Steuerbordseite ungleiche Gitterabstände aufweisen.

7. Anordnung nach einem der Ansprüche 1 - 6, d a d u r c h
   g e k e n n z e i c h n e t , daß die Leitschaufeln (6)
   Profilzylinderausschnitte sind und daß ihre Eintrittskanten (8) mit zunehmendem Abstand vom Schiffsrumpf nach Maßgabe der lokalen Komponenten der Grenzschichtströmung (7)
   zurückgeschnitten sind.

8. Anordnung nach Anspruch 7, d a d u r c h   g e k e n n -
   z e i c h n e t , daß die Leitschaufeln (6) Kreiszylinderausschnitte sind und in Schiffslängsrichtung eine konstante Krümmung aufweisen.

9. Anordnung nach einem der Ansprüche 1 - 8, d a d u r c h
   g e k e n n z e i c h n e t , daß die Leitschaufeln (6)
   über ihre Länge eine Profildickenverteilung aufweisen.

10. Anordnung nach einem der Ansprüche 1 - 9, d a d u r c h
    g e k e n n z e i c h n e t , daß die Leitschaufeln (6)
    grade Austrittskanten (9) aufweisen.

11. Anordnung nach einem der Ansprüche 1 - 10, d a d u r c h
    g e k e n n z e i c h n e t , daß die Austrittskanten (9)
    im Bereich ihrer Anschlußstelle an den Schiffsrumpf orthogonal zur Oberfläche des Schiffsrumpfes gerichtet sind.

12. Anordnung nach einem der Ansprüche 1 - 11, d a d u r c h
    g e k e n n z e i c h n e t , daß die Leitschaufeln (6)
    auf beiden Seiten einer Platte (10) angeordnet sind, die
    im Schraubenbrunnen vor dem Propeller (5) mittschiffs am
    Hintersteven befestigt ist.

13. Anordnung nach Anspruch 12, d a d u r c h   g e k e n n -
    z e i c h n e t , daß sowohl oberhalb als auch unterhalb
    der Propellerwelle eine Platte (10) mit Leitschaufeln (6)
    angeordnet ist.

Fig. 1

Fig. 2

0131115

Fig. 3

Fig. 4

Fig. 5

Fig. 6

0131115